# EUROPÄISCHE PATENTSCHRIFT

(11) **EP 0 503 413 B1**
(45) Veröffentlichungstag und Bekanntmachung des Hinweises auf die Patenterteilung: **21.08.1996**
(21) Anmeldenummer: 92103516.8
(22) Anmeldetag: 29.02.1992
(51) Int. Cl.: H04B 14/04, H04J 3/16

(54) **Verfahren und Einrichtung zur Codierung und Decodierung eines analogen NF-Signals in ein PCM-Format, insbesondere zur Übertragung von Sprachinformation in einer Wechsel- oder Gegen-Lautsprechanlage**
Method and apparatus for coding and decoding of an analog low frequency signal into a PCM format, especially for transmitting speech information in intercom apparatus
Procédé et dispositif de codage et de décodage d'un signal analogique basse fréquence dans un format MIC, spécialement pour la transmission de la parole dans un dispositif d'interphone

(30) Priorität: 09.03.1991 DE 4107592
(43) Veröffentlichungstag der Anmeldung: 16.09.1992
(73) Patentinhaber: Neumann Elektronik GmbH, D-45478 Mülheim (DE)
(72) Erfinder: Schulte, Friedrich, W-4300 Essen 1 (DE); Kemmerling, Martin, W-5802 Wetter 2 (DE)
(74) Vertreter: Feder, Wolf-Dietrich, Dr. Dipl.-Phys.

(56) Entgegenhaltungen:
- FR-A- 2 301 136
- PATENT ABSTRACTS OF JAPAN vol. 9, no. 208 (E-338)(1931) 24. August 1985
- EDN ELECTRICAL DESIGN NEWS. Bd. 32, Nr. 9, 30. April 1987, NEWTON, MASSACHUSETTS US Seiten 211 - 218 BARNES 'Consider standard features when selecting codecs'

## Beschreibung

Die Erfindung betrifft ein Verfahren zur Codierung und Decodierung eines analogen NF-Signals in ein PCM-Format, insbesondere zur Übertragung von Sprachinformation in einer Wechsel- oder Gegen- Lautsprechanlage mit den Merkmalen aus dem Oberbegriff des Patentanspruchs 1 sowie eine Einrichtung zur Durchführung dieses Verfahrens, ausgehend von den Merkmalen aus dem Oberbegriff des Patentanspruchs 3.

Es ist bekannt, ein codiertes Sprachsignal mit einer Bandbreite von 3,4 kHz im PCM-Format zu übertragen, wobei einem Abtastwert des analogen NF-Signals genau ein Zeitschlitz im PCM-Rahmen zugewiesen wird. Dabei faßt jeder Zeitschlitz ein Datenwort von 8-Bit pro 125 µs, was einer Datenrate von 64 kBit/s entspricht. Eine Übertragung mit der obengenannten Bandbreite entspricht üblicher Telefonqualität und ist daher im Fernsprechverkehr akzeptabel.

Es hat sich aber gezeigt, daß bei einer Übertragung von Sprachinformation, die über Lautsprecher abgestrahlt werden soll, diese Bandbreite nicht ausreicht, um eine verständliche Sprache zu erzeugen.

In der FR-A- 2 301 136 ist ein Verfahren mit den Merkmalen aus dem Oberbegriff des Patentanspruchs 1 beschrieben, bei dem eine Erhöhung der Übertragungsbandbreite dadurch erreicht wird, daß für eine Breitbandverbindung jeweils mehrere Kanäle innerhalb eines Zeitvielfachrahmens belegt werden und durch eine besondere Kanalzuordnungsschaltung gewährleistet wird, daß die auf mehrere Zeitvielfachkanäle verteilten Informationen in der gleichen Reihenfolge aus den Sprachspeichern der Zeitvielfachvermittlungsstelle ausgelesen werden, in der sie eingelesen wurden. Bei der hierzu verwendeten Kanalzuordnungsschaltung sind erste, zyklisch ausgelesene Speichereinrichtungen vorgesehen, die die Position der Eingangs- und Ausgangskanäle einer Breitbandverbindung innerhalb eines Rahmens markieren. Mit dem Ausgang der Speichereinrichtungen ist ein bidirektionales Schieberegister verbunden, das einen Referenzwert enthält, der um eine Einheit vergrößert wird, wenn aus den Speichereinrichtungen die Markierung eines Ausgangskanals ausgelesen wird und um eine Einheit verringert wird, wenn die Markierung eines Eingangskanals ausgelesen wird. Es ist weiterhin eine Logikschaltung vorhanden, die denjenigen Ausgangskanal identifiziert, bei dem der höchste Referenzwert im Schieberegister aufgetreten war und es sind zweite Speichereinrichtungen vorgesehen, in denen die Adressen der Ausgangskanäle den Adressen der Eingangskanäle aufeinanderfolgend so zugeordnet werden, daß der Ausgangskanal mit dem höchsten Referenzwert dem zeitlich unmittelbar vorhergehenden Eingangskanal zugeordnet ist.

Es sind auch andere Verfahren bekannt, mit denen Sprachinformation mit einer Bandbreite, die größer ist als 3,4 kHz, übertragen werden kann. Bei diesen Verfahren werden die zu übertragenden Daten nach der Digitalisierung mit Hilfe von Datenreduktionsalgorithmen soweit komprimiert, daß zur Übertragung ebenfalls nur ein Zeitschlitz pro PCM-Rahmen erforderlich ist. Ein Nachteil dieser bekannten Technik ist der hohe schaltungstechnische Aufwand für die Datenkompression in der Sende- und der Datende-kompression in der Empfangsrichtung.

Der Erfindung liegt die Aufgabe zugrunde, ein Verfahren mit den Merkmalen aus dem Oberbegriff des Patentanspruchs 1 so auszugestalten, daß bei geringem schaltungstechnischen Aufwand Sprachinformation mit einer Bandbreite von mehr als 7 kHz übertragen werden kann.

Die Lösung dieser Aufgabe geschieht erfindungsgemäß mit den Merkmalen aus dem kennzeichnenden Teil des Patentanspruchs 1. Eine vorteilhafte Weiterbildung des erfindungsgemäßen Verfahren ist in Patentanspruch 2 beschrieben.

Eine Einrichtung zur Durchführung des erfindungsgemäßen Verfahrens besitzt die Merkmale aus dem kennzeichnenden Teil des Patentanspruchs 3. Vorteilhafte Weiterbildungen dieser Einrichtung sind in den Ansprüchen 4 bis 6 beschrieben.

Das erfindungsgemäße Verfahren ist überall da mit großem Vorteil einsetzbar, wo Sprachinformation über Lautsprecher abgegeben werden soll, insbesondere zur Übertragung von Sprachinformation in einer Wechsel- oder Gegen- Lautsprechanlage. Es ist aber keineswegs auf diese Anwendungsart beschränkt.

Das erfindungsgemäße Verfahren verzichtet auf Datenreduktionsalgorithmen und erfordert daher zur Übertragung von Sprachinformation mit einer Bandbreite zwischen 7 und 8 kHz eine Datenrate von 128 kBit/s. Der Grundgedanke des erfindungsgemäßen Verfahrens besteht darin, die zur Übertragung notwendige Datenrate dadurch zu erreichen, daß jeweils zwei Zeitschlitze eines PCM-Rahmens durch einen Sprachkanal belegt werden. Diese beiden Zeitschlitze werden aber nicht zeitlich äquidistant auf der PCM-Multiplexleitung abgelegt (z.B. Zeitschlitz 0 und Zeitschlitz 16 im PCM32-System) wie es der Abtasttakt eines Analog/Digital-Wandlers nahelegen würde, sondern es werden jeweils zwei unmittelbar aufeinanderfolgende Zeitschlitze belegt (z.B. Zeitschlitz 0 und Zeitschlitz 1). Dadurch wird in PCM32-Systemen (PCM-System mit 32 Zeitschlitzen auf 125µs) eine weitgehende Kompatibilität zu dem in der Industrie weitgehend üblichen IOM2-Standard erreicht, für den einige Ausführungsarten von ISDN-Bausteine ausgelegt sind. Derartige ISDN-Bausteine mit IOM2-Schnittstelle können die beiden aufeinanderfolgenden Zeitschlitze als B1- bzw. B2-Kanal des ISDN-Basisanschluß-Formats erkennen, die gemeinsam über eine Leitung übertragen werden.

Die Belegung von zwei Zeitschlitzen des PCM-Rahmens mit jeweils einem Abtastwert des analogen NF-Signals, der in ein Datenwort von 8 Bit umgewandelt wird, ermöglicht die für die Übertragung mit höherer Bandbreite notwendige höhere Abtastfrequenz. Aufgrund der Tatsache, daß zwei aufeinanderfolgende Abtastwerte zwei unmittelbar aufeinanderfolgenden Zeitschlitzen des PCM-Rahmens zugeordnet werden, macht es notwendig, eine Zwischenspeicherung jedes zweiten Abtastwertes vorzunehmen, da der zeitliche Abstand zweier Abtastwerte wesentlich größer ist als der zeitliche Abstand zweier unmittelbar aufeinanderfolgender Zeitschlitze des PCM-Rahmens. Der schaltungstechnische Aufwand des erfindungsgemäßen Verfahrens kann relativ klein gehalten werden. Es sind lediglich zwei zusätzliche Zwischenspeicher zur Speicherung der Datenworte im Sendeteil und im Empfangsteil sowie ein Steuerwerk erforderlich, durch welches die zu übertragenden Datenworte jeweils den richtigen Zeitschlitzen zugeführt werden.

Im folgenden wird anhand der beigefügten Zeichnungen ein Ausführungsbeispiel für das erfindungsgemäße Verfahren sowie eine Einrichtung zur Durchführung dieses Verfahrens näher erläutert.

In den Zeichnungen zeigen:
- Fig. 1: in einem Blockschaltbild eine Einrichtung zur digitalen Übertragung eines analogen NF-Signals über ein PCM-System;
- Fig. 2: in einer graphischen Darstellung die Zeitschlitzbelegung des PCM-Rahmens bei der Übertragung mittels der Einrichtung nach Fig. 1;
- Fig. 3: in einem Blockschaltbild die Funktionsweise des Steuerwerks der Einrichtung nach Fig. 1.

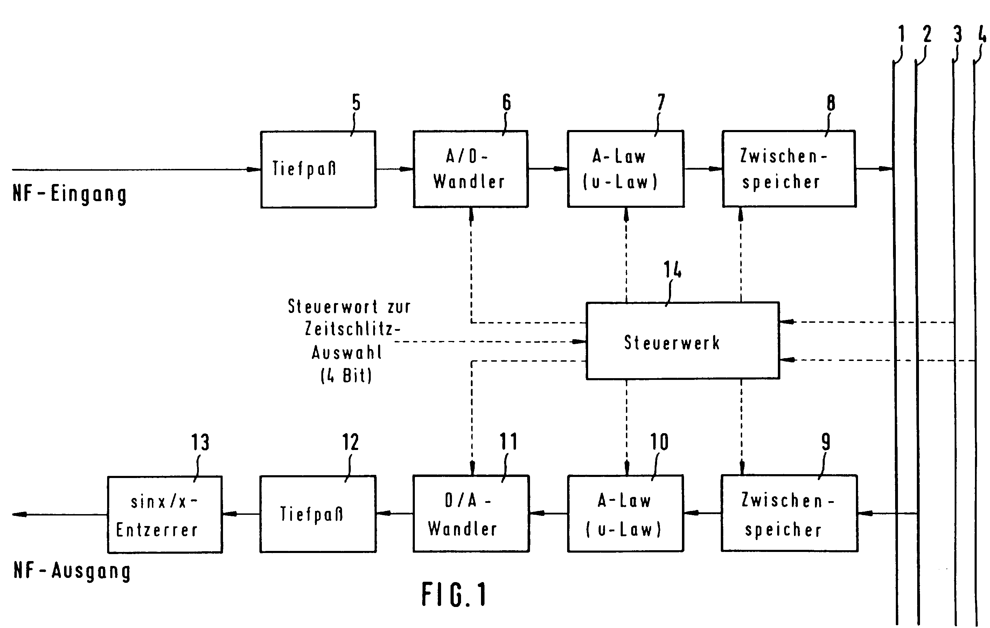

Bei der Einrichtung nach Fig. 1 wird das von einem Mikrofon kommende, über den NF-Eingang eintretende, zunächst nicht bandbegrenzte, analoge Sprachsignal durch ein Tiefpaßfilter 5 geschickt, das oberhalb von 8 kHz eine Sperrdämpfung von mindestens 40 dB besitzt. Anschließend wird das Signal einem Analog/Digital-Wandler 6 zugeführt, der mit einer Abtastrate von 16 kHz arbeitet. Dem Analog/Digital-Wandler 6 ist eine Vorrichtung 7 zur Umcodierung gemäß CCITT (A-Law oder µ-Law) vorgesehen. Jeder Abtastwert des analogen NF-Signals führt zu einem Datenwort mit 8 Bit. Die Datenworte werden einem ersten Zwischenspeicher 8 zugeführt, in welchem jedes zweite Datenwort solange festgehalten wird bis das jeweils darauffolgende Datenwort ebenfalls zur Verfügung steht. Die insgesamt 16 Bit der beiden aufeinanderfolgenden Datenworte werden dann mittels eines Steuerwerks 14, das weiter unten näher erläutert wird, auf die PCM-Multiplexleitung 1,2 durchgeschaltet, und zwar so, daß sie zwei aufeinanderfolgende Zeitschlitze belegen.

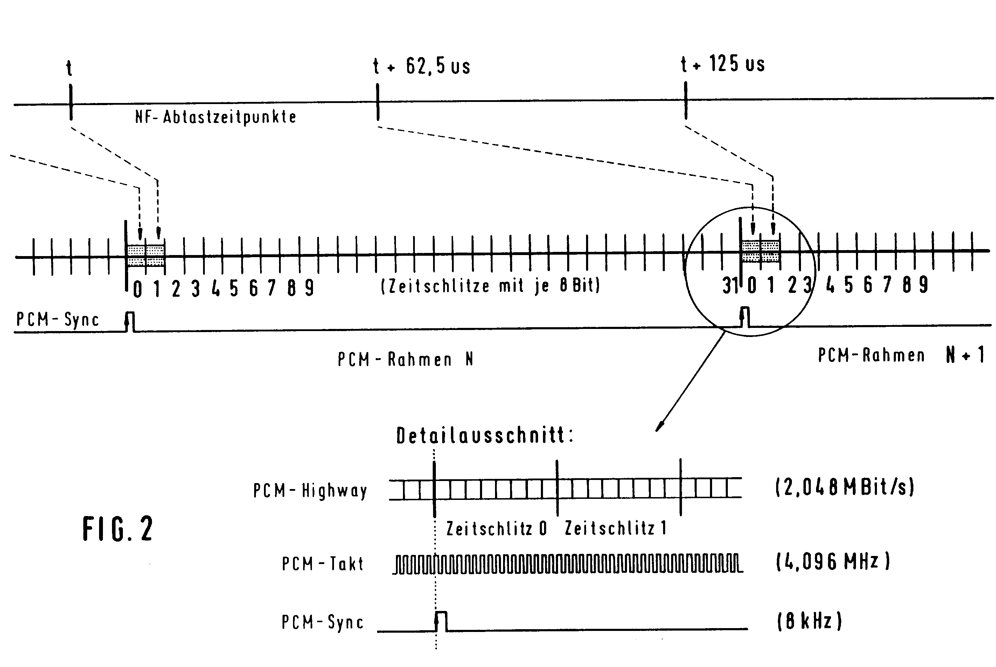

Diese Vorgänge sind aus Fig. 2 abzulesen.

Das verwendete PCM32-System besitzt eine PCM-Takt-Frequenz von 4,096 MHz und eine PCM-Synchronisations-Frequenz von 8 kHz. Jeder PCM-Rahmen N, N+1 usw. mit einer zeitlichen Länge von 125µs enthält 32 Zeitschlitze 0, 1, 2, 3 usw., von denen jeder 8 Bit aufnimmt, so daß insgesamt 2,048 MBit/s übertragen werden können, d.h. der PCM-Rahmen ermöglicht 16 Sprachkanäle mit einer Datenrate von jeweils 128 kBit/s.

In Fig. 2 ist über der Darstellung des PCM-Rahmens das zeitliche Verhalten am Analog/Digital-Wandler 6 dargestellt. Die Abtastungen erfolgen beispielsweise zu den Zeitpunkten t, t+62,5 µs, t+125 µs usw.. Das Datenwort zum Zeitpunkt t+62,5 µs wird im Zwischenspeicher 8 abgelegt und erst 62,5 µs später weitergeleitet, so daß trotz der Abtastfrequenz von 16 kHz des Analog/Digital-Wandlers die Übergabe der Datenworte an die PCM-Multiplexleitung 1,2 mit der PCM-Synchronisations-Frequenz von 8 kHz erfolgt.

Der Empfangsteil der Einrichtung nach Fig. 1 besitzt einen zweiten Zwischenspeicher 9, dem die von der PCM-Multiplexleitung 1,2 abgenommenen Datenworte zugeführt werden. An den zweiten Zwischenspeicher 9 schließt sich eine Vorrichtung 10 zur Umcodierung an und an diese der Digital/Analog-Wandler 11, dem ein Tiefpaßfilter 12 und eine sin x/x-Entzerrungsvorrichtung 13 nachgeschaltet ist, die mit dem NF-Ausgang verbunden ist.

In der Empfangsrichtung werden während der vom Steuerwerk ausgewählten beiden aufeinanderfolgenden Zeitschlitze die Datenworte von der PCM-Multiplexleitung 1,2 abgenommen. Das Datenwort des ersten dieser beiden Zeitschlitze wird sofort dem Digital/Analog-Wandler 11 zugeführt, während das Datenwort des zweiten Zeitschlitzes im Zwischenspeicher 9 abgelegt und erst 62,5 µs später weitergeleitet wird, so daß die Wandelfrequenz des Digital/Analog-Wandlers 11 ebenfalls wieder 16 kHz beträgt. Durch das Tiefpaßfilter 12 und dem nachfolgenden Entzerrer 13 wird das ursprüngliche Sprachsignal wieder hergestellt.

Die Zuführung der Datenworte zur PCM-Multiplexleitung 1,2 sowie ihre Abnahme von ihr wird durch ein Steuerwerk 14 gesteuert. Diesem Steuerwerk 14 wird ein Steuerwort von vier Bit (entsprechend den 16 möglichen Doppelzeitschlitzen des PCM32-Systems) zugeführt, durch das die jeweils verwendeten Zeitschlitze bestimmt werden. Weiterhin werden dem Steuerwerk das PCM-Takt-Signal 3 und das PCM-Synchronisations-Signal 4 zugeführt.

Aus diesen Steuersignalen erzeugt das Steuerwerk 14 alle intern benötigten Takte und sonstigen Steuersignale.

Die genaue schaltungstechnische Realisierung des Steuerwerks hängt sehr entscheidend von den übrigen verwendeten Schaltungskomponenten der Baugruppe ab, wie z.B. vom Typ des Analog/Digital bzw. Digital/Analog-Wandlers 6, 11 von der Art der Filterbausteine 5, 12 oder vom Typ der Zwischenspeicher 8, 9.

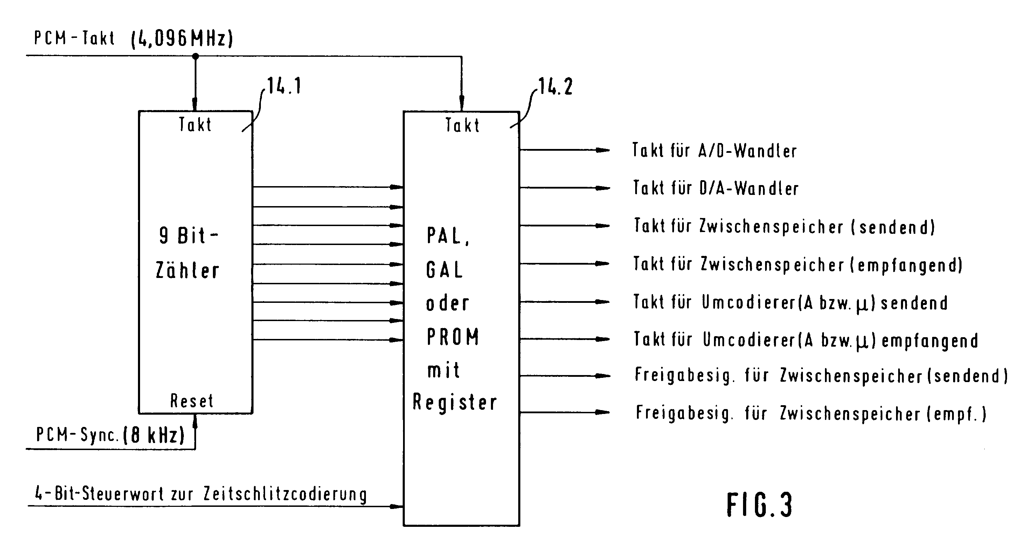

Ganz allgemein läßt sich das erforderliche Steuerwerk mit einer Schaltungsstruktur gemäß Fig. 3 realisieren:

Ein 9-Bit-Zähler 14.1 wird mit dem PCM-Takt (4,096 MHz) betrieben und mit dem PCM-Sync-Signal (8 kHz) zurückgesetzt. Auf diese Weise wird jeder PCM-Rahmen in 512 gleichlange Zeitabschnitte von je 244 ns eingeteilt, die durch die neun Bit des Zählerstands codiert werden. Innerhalb dieses Zeitrasters lassen sich nun die erforderlichen Takt- und Impulsschemen für die verwendeten Schaltungskomponenten erzeugen, wobei die zeitliche Lage dieser Schemen relativ zum PCM-Rahmenanfang durch das 4-Bit-Steuerwort zur Zeitschlitzcodierung bestimmt wird. Die einfachste und flexibelste schaltungstechnische Realisierung zur Erzeugung der Takt- und Impulsschemen besteht in einem programmierbaren Logikbaustein (PAL, GAL oder PROM mit Nachtastregister). Eingangssignale für diese programmierbare Logik sind die neun Zählerausgangsbits sowie die vier Bits des Steuerworts zur Zeitschlitzcodierung; Ausgangssignale sind die von den übrigen Schaltungskomponenten der Baugruppe benötigten Takte und Impulse.

## Patentansprüche

1. Verfahren zur Codierung und Decodierung eines analogen NF-Signals in ein PCM-Format, insbesondere zur Übertragung von Sprachinformation in einer Wechsel- oder Gegen- Lautsprechanlage, bei dem das NF-Signal nach Begrenzung seiner Bandbreite auf einen vorgegebenen Wert durch Analog/Digital-Wandlung in ein digitales Signal umcodiert wird, wobei jedem Abtastwert des analogen NF-Signals ein Datenwort mit 8 Bit zugeordnet ist und jedes Datenwort in einem Zeitschlitz eines PCM-Rahmens mit einer vorgegebenen Anzahl von jeweils ein Datenwort fassenden Zeitschlitzen auf der PCM-Multiplexleitung übertragen wird und nach dem Abnehmen der Datenworte von der PCM-Multiplexleitung das digitale Signal durch Digital/Analog-Wandlung in ein analoges NF-Signal decodiert wird, wobei die Abtastfrequenz der Analog/Digital- und Digital/Analog-Wandlung doppelt so hoch ist wie die PCM-Synchronisations-Frequenz, dadurch gekennzeichnet, daß nach der Codierung jeweils jedes zweite Datenwort zwischengespeichert wird bis das jeweils darauffolgende Datenwort zur Verfügung steht und diese beiden aufeinanderfolgenden Datenworte so auf die PCM-Multiplexleitung gegeben werden, daß sie zwei unmittelbar aufeinanderfolgende Zeitschlitze belegen und nach dem Abnehmen der Datenworte von der PCM-Multiplexleitung jeweils das im ersten der beiden unmittelbar aufeinanderfolgenden Zeitschlitze übertragene Datenwort sofort decodiert wird, während das im zweiten Zeitschlitz übertragene Datenwort zwischengespeichert wird bis der Decodiervorgang des vorangegangenen Datenwortes abgeschlossen ist.

2. Verfahren nach Anspruch 1, dadurch gekennzeichnet, daß zur Übertragung von Sprachinformation mit einer Bandbreite zwischen 7 und 8 kHz ein PCM-Format mit einer 8-kHz-Rahmenstruktur und 32 Zeitschlitzen pro Rahmen bei einer Abtastfrequenz der Analog/Digital-Digital/Analog-Wandlung von 16 kHz verwendet wird.

3. Einrichtung zur Durchführung des Verfahrens nach Anspruch 1 mit einem PCM-System, an welches ein Sendeteil mit einem ersten Tiefpaßfilter und einem diesem nachgeschalteten Analog/Digital-Wandler sowie ein Empfangsteil mit einem Digital/Analog-Wandler und einem diesem nachgeschalteten zweiten Tiefpaßfilter angeschlossen ist, dadurch gekennzeichnet, daß im Sendeteil dem Analog/Digital-Wandler (6) ein erster Zwischenspeicher (8) nachgeschaltet und im Empfangsteil dem Digital/Analog-Wandler (11) ein zweiter Zwischenspeicher (9) vorgeschaltet ist und ein Steuerwerk (14) vorgesehen ist, dem als Ansteuersignal das PCM-Takt-Signal, das PCM-Synchronisations-Signal sowie ein Steuerwort zur Zeitschlitzcodierung zugeführt werden und von dem aus dem Analog/Digital-Wandler (6) sowie dem Digital/Analog-Wandler (11) und den beiden Zwischenspeichern (8, 9) Taktsignale zugeführt werden und von dem aus weiterhin dem ersten Zwischenspeicher (8) Freigabesignale zur Abgabe der in ihm gespeicherten Datenworte auf die PCM-Multiplexleitung (1, 2) und dem zweiten Zwischenspeicher (9) Freigabesignale zur Abgabe der in ihm gespeicherten Datenworte an den Digital/Analog-Wandler (11) zugeführt werden.

4. Einrichtung nach Anspruch 3, dadurch gekennzeichnet, daß das Tiefpaßfilter (5) im Sendeteil oberhalb von 8 kHz eine Sperrdämpfung von mindestens 40 dB besitzt.

5. Einrichtung nach Anspruch 3 oder 4, dadurch gekennzeichnet, daß im Sendeteil und im Empfangsteil jeweils zwischen dem Analog/Digital- bzw. Digital/Analog-Wandler (6, 11) und dem ersten bzw. zweiten Zwischenspeicher (8, 9) Umcodierungsvorrichtungen (7, 10) angeordnet sind, die vom Steuerwerk (14) aus angesteuert sind.

6. Einrichtung nach einem der Ansprüche 3 bis 5, dadurch gekennzeichnet, daß das Steuerwerk (14) einen vom PCM-Takt-Signal getakteten und vom PCM-Sychronisations-Signal rückgesetzten Zähler (14.1) aufweist, der ein Speicher enthaltendes Register (14.2) ansteuert, dem zusätzlich ein Steuerwort zur Zeitschlitzcodierung zugeführt wird.

## Claims

1. Method for the coding and decoding of an analog AF signal into a PCM format, in particular for the transmission of speech information in an interphone or intercom loudspeaker system, in which, after its bandwidth has been limited to a predetermined value, the AF signal is recoded as a digital signal by analog/digital conversion, wherein a data word containing 8 bits is assigned to each sample value of the analog AF signal and each data word is transmitted on the PCM multiplex line in a time slot of a PCM frame containing a predetermined number of time slots each comprising a data word and, after the removal of the data words from the PCM multiplex line, the digital signal is decoded as an analog AF signal by digital/analog conversion, and wherein the sampling frequency of the analog/digital and digital/analog conversion is twice as high as the PCM synchronization frequency, characterized in that, after the coding, every second data word is always temporarily stored until the respective subsequent data word is available and these two consecutive data words are supplied to the PCM multiplex line in such a way that they occupy two immediately consecutive time slots and, after the removal of the data words from the PCM multiplex line, the data word transmitted in the first of the two directly consecutive time slots is always immediately decoded, whereas the data word transmitted in the second time slot is temporarily stored until the operation of decoding the preceding data word is complete.

2. Method according to Claim 1, characterized in that, to transmit speech information with a bandwidth between 7 and 8 kHz, a PCM format is used which has an 8 kHz frame structure and 32 time slots per frame, with a sampling frequency of the analog/digital-digital/ analog conversion of 16 kHz.

3. Device for performing the method according to Claim 1 using a PCM system to which a transmission section is connected which has a first low-pass filter and an analog/digital converter connected downstream of the latter and a receiving section is connected which has a digital/analog converter and a second low-pass filter connected downstream of the latter,
characterized in that a first temporary memory (8) is connected downstream of the analog/digital converter (6) in the transmitting section and a second temporary memory (9) is connected upstream of the digital/analog converter (11) in the receiving section and a control unit (14) is provided to which the PCM clock signal, the PCM synchronization signal and a control word for time-slot coding are fed as drive signal and by which clock signals are supplied from the analog/digital converter (6) and from the digital/analog converter (11) and the two temporary memories (8, 9) and by which enable signals are supplied from, furthermore, the first temporary memory (8) to deliver the data words stored in it to the PCM multiplex line (1, 2) and enable signals are supplied to the second temporary memory (9) to deliver the data words stored in it to the digital/analog converter (11).

4. Device according to Claim 3, characterized in that the low-pass filter (5) in the transmitting section has a blocking attenuation of at least 40 dB above 8 kHz.

5. Device according to Claim 3 or 4, characterized in that recoding devices (7, 10) which are driven from the control unit (14) are disposed in the transmitting section and in the receiving section in each case between the analog/digital or digital/analog converter (6, 11), respectively and the first or second temporary memory (8, 9), respectively.

6. Device according to one of Claims 3 to 5,
characterized in that the control unit (14) has a counter (14.1) which is clocked by the PCM clock signal and reset by the PCM synchronization signal and which drives a register (14.2) which contains a memory and to which a control word is additionally supplied for time-slot coding.

## Revendications

1. Procédé pour le codage et le décodage d'un signal B.F. analogique en un format PCM, en particulier pour la transmission d'une information vocale dans une installation d'interphone à haut-parleur, selon lequel le signal B.F., après délimitation de son amplitude de bande à une valeur prédéterminée, est recodé en un signal numérique par conversion analogique/numérique, tandis qu'à chaque valeur de balayage du signal analogique B.F. est associée une zone de données de 8 bits et chaque zone est transmise, dans un intervalle de temps d'un cadre PCM à nombre prédéterminé d'intervalles contenant chacun une zone de données, sur la ligne multiplex PCM, après la reprise de la zone de données par la ligne multiplex PCM ledit signal numérique étant décodé en un signal B.F. analogique par conversion numérique/analogique, tandis que la fréquence de balayage de la conversion analogique/numérique et numérique/analogique étant égale au double de la fréquence de synchronisation PCM, caractérisé en ce que, après le codage, respectivement une zone de données sur deux est mémorisée dans une mémoire intermédiaire jusqu'à ce que la zone de données suivante devienne disponible et que ces deux zones de données successives sont transmises à la ligne multiplex PCM de telle manière qu'elles occupent deux intervalles de temps immédiatement successifs et que après la reprise des zones de données par la ligne multiplex PCM, la zone de données transmise respectivement dans le premier des deux intervalles immédiatement successifs est décodée immédiatement, tandis que la zone de données transmise dans le deuxième intervalle de temps est stockée dans une mémoire intermédiaire jusqu'à ce que la procédure de décodage de la zone précédente soit achevée.

2. Procédé selon la revendication 1, caractérisé en ce que, pour la transmission d'une information vocale d'une largeur de bande comprise entre 7 et 8 kHz, est utilisé un format PCM d'une structure à cadre de 8 kHz et de 32 intervalles de temps par cadre, pour une fréquence de balayage de la conversion analogique/numérique - numérique/analogique de 16 kHz/

3. Dispositif pour la mise en oeuvre du procédé conforme à la revendication 1 à l'aide d'un système PCM auquel est connecté une partie émetteur comportant un premier filtre passe-bas et un convertisseur analogique/numérique monté en aval de celui-ci, ainsi qu'une partie récepteur comportant un convertisseur numérique/analogique et un deuxième filtre passe-bas monté en aval de ce dernier, caractérisé en ce que dans la partie émetteur une première mémoire intermédiaire (8) est montée en aval du convertisseur (6) analogique/numérique et que dans la partie récepteur une deuxième mémoire intermédiaire (9) est montée en amont du convertisseur (11) numérique/analogique, une unité de commande (14) étant prévue à laquelle est amené, pour servir de signal d'amorçage du signal d'impulsion PCM, le signal de synchronisation PCM ainsi qu'un mot de commande pour le codage des intervalles de temps, et de laquelle sont amenés des signaux d'impulsion au convertisseur (6) analogique/numérique et au convertisseur (11) numérique/analogique ainsi qu'aux deux mémoires intermédiaires (8, 9), par ailleurs de ladite unité de commande (14) sont transmis à la première mémoire intermédiaire (8) des signaux de validation pour le transfert des zones de données mémorisées dans cette mémoire à la ligne multiplex PCM (1, 2) et à la deuxième mémoire intermédiaire (9) des signaux de validation pour le transfert des zones de données mémorisées dans celle-ci au convertisseur (11) numérique/analogique.

4. Dispositif selon la revendication 3, caractérisé en ce que le filtre passe-bas (5) possède dans la partie émetteur, au-dessus de 8 kHz, un atténuateur d'inhibition d'au moins 40 dB.

5. Dispositif selon la revendication 3 ou 4, caractérisé en ce que dans la partie émetteur et dans la partie récepteur respectivement sont disposés, entre le convertisseur analogique/numérique ou respectivement numérique/analogique (6, 11) et la première respectivement la deuxième mémoire intermédiaire (8, 9), des dispositifs de recodage (7, 10) qui sont commandés par l'unité centrale (14).

6. Dispositif selon l'une des revendications 3 à 5, caractérisé en ce que l'unité de commande (14) présente un compteur (14.1) rythmé par le signal d'impulsion PCM et rétrogradé par le signal de synchronisation PCM, lequel compteur (14.1) commandant un registre (14.2) qui contient une mémoire et auquel est amené complémentairement un mot de commande destiné au codage des intervalles de temps.
